# EUROPEAN PATENT APPLICATION

(11) **EP 4 371 839 A1**
(43) Date of publication of application: **22.05.2024**
(21) Application number: 22208626.6
(22) Date of filing: 21.11.2022
(51) Int. Cl.: B60W 50/16, H04R 5/04, B60K 35/00, H04R 1/02, H04R 5/02, H04R 11/02, B60N 2/90, B60Q 9/00

(54) **INFOTAINMENT SYSTEM FOR A VEHICLE, ASSOCIATED VEHICLE AND CONTROL METHOD**

(71) Applicant: Volvo Truck Corporation, 405 08 Göteborg (SE)
(72) Inventor: QUIBRIAC, Yann, 69007 LYON (FR); RIBERO, Raphael, 69390 MILLERY (FR); JOHANSSON, Fredrik, 421 67 VÄSTRA FRÖLUNDA (SE)
(74) Representative: Lavoix

(57) **Abstract**

This infotainment system (100) for a vehicle comprises a speaker (102), which is configured to be attached to a seat of the vehicle and which comprises a transducer (104). The infotainment system comprises an electronic control unit (120), which is configured to receive a first signal (132) from an audio source (130), and to transmit a first output (122), based on the first signal, to the transducer, so as to excite the transducer in an audible frequency range above a predetermined first threshold, the infotainment system being in an audio mode. The infotainment system further comprises a haptic controller (140), which is configured to generate a second signal (142), representative of a haptic signal. The electronic control unit is configured to transmit a second output (124), based on the second signal, to the transducer, so as to excite the transducer in a frequency range below a predetermined second threshold, the second threshold being equal to or lower than the first threshold, the infotainment system being in a vibration mode. The infotainment system is configured to combine or to switch between the audio mode and the vibration mode.

## Description

### TECHNICAL FIELD

The disclosure relates generally to the field of infotainment systems for vehicles. The disclosure relates further to a vehicle comprising such an infotainment system, and to a control method of such an infotainment system. The disclosure can be applied in heavy-duty vehicles, such as trucks, buses, and construction equipment. Although the disclosure may be described with respect to a particular vehicle, the disclosure is not restricted to any particular vehicle.

### BACKGROUND

In the field of vehicles, especially road vehicles such as a car or a truck, such a vehicle is usually equipped with an infotainment system, which provides a driver and/or passenger(s) of the vehicle with music and/or video. In recent vehicles, the infotainment system also includes driving aids for the driver. For example, such driving aids include audio warnings and/or haptic feedback. A haptic feedback is a mechanical feedback, for example vibrations and/or and opposing force, which is emitted in order to alert the driver of a potential danger. A non-limitative example of a haptic feedback system is a lane departure warning system, which emits vibration in the steering wheel when the vehicle changes lane without winkers.

Such a haptic feedback system usually comprises a dedicated vibration generator, for example an electric motor with an unbalanced mass, which is installed in the vehicle at the intended location, like the steering wheel in the previous example. More generally, a haptic feedback system usually requires the installation of a vibration generator at the intended place, which is costly and difficult to implement in case of an aftermarket upgrade.

The invention aims at providing an infotainment system, which includes haptic feedback and which is easy and cheap to implement.

### SUMMARY

According to a first aspect of the disclosure, the invention relates to an infotainment system for a vehicle, the infotainment system comprising a speaker, which is configured to be attached to a seat of the vehicle, which comprises a transducer, and which is configured to generate audible sounds above a first threshold. The infotainment system also comprises an audio source, configured to generate a first signal representative of an audio signal, and an electronic control unit, which is configured to receive the first signal and to generate a first output based on the first signal, and to transmit the first output to the transducer, so as to excite the transducer in an audible frequency range above a predetermined first threshold, the infotainment system being in an audio mode. The infotainment system further comprises a haptic controller, which is configured to generate a second signal, representative of a haptic signal. The electronic control unit is configured to receive the second signal and to generate a second output, based on the second signal, and to transmit the second output to the transducer, so as to excite the transducer in a frequency range below a predetermined second threshold, the second threshold being equal to or lower than the first threshold, the infotainment system being in a vibration mode. The infotainment system is configured to switch between the first mode and the second mode.

Thanks to the invention, the speaker, which is controlled by the ECU to emit sounds, in other words to play music, is also used to emit vibrations to warn the driver of a specific situation. In other words, the ECU controls the existing speaker to provide haptic feedback. It is therefore possible to provide haptic feedback without having to add a dedicated vibration generator, which is easy and cheap to implement.

In some examples, the first threshold is equal or lower than 80 Hz, preferably equal or lower than 40 Hz, more preferably equal to 20 Hz. A technical benefit may include the fact that the speaker being configured to deliver a higher sound output power at lower frequencies, the speaker also delivers a higher output vibration power for the haptic feedback.

In some examples, the second threshold is equal to 20 Hz. As a result, the vibrations emitted by the speaker remain below the audible frequency range, whichever the working frequency range of the speaker.

In some examples, the transducer is configured to exclusively generate vibrations below the second threshold when the electric control unit receives the second signal. A technical benefit may include the fact that when a haptic feedback is required, the speaker does not emit audible sound. A higher power output is therefore available for the haptic feedback, while the infotainment system works in a silent mode.

In some examples, the transducer is configured to function in a mixed mode, where the speaker generates, simultaneously, sounds above the first threshold and vibrations below the second threshold. A technical benefit may include combining sounds and vibration to provide specific feedback. Also, the haptic feedback does not interrupt the sound being played by the speaker, for example in the case of music.

In some examples, the first threshold and the second threshold are equal. A technical benefit may include the fact that the infotainment system may transition seamlessly between the various functioning modes, such as the audio mode, the vibration mode, etc., which contributes to reduce the stress that the speaker incurs under the ECU control.

According to a second aspect of the disclosure, the invention also relates to a vehicle, comprising a seat and an infotainment system as previously described. The seat comprises a sitting portion with a frame, whereas the speaker is attached to the frame. A technical benefit may include providing haptic feedback to the person seated onto the seat. Preferably, the seat is a driver's seat.

In some examples, the speaker is attached under the sitting portion. A technical benefit may include the fact that mainly the person sitting on the seat would feel the vibrations generated by the speaker, without disturbing the other people within the vehicle. In addition, since the space below a seat is often unused, having the speaker located under the seat allows for a compact arrangement.

According to a third aspect of the disclosure, the invention relates to a control method implemented with the infotainment system as previously described. When the electronic control unit receives the first signal and no second signal, the infotainment system switches to the audio mode, whereas when the electronic control unit receives the second signal and no first signal, the infotainment system switches to the vibration mode. The second aspect of the disclosure may seek to provide a control method for an existing infotainment system comprising a speaker. A technical benefit may include adding haptic feedback function to an existing infotainment system by specifically controlling the existing speaker, such speaker being preferably a sub-woofer fixed under the driver's seat.

In some examples, when the electronic control unit receives simultaneously the first signal and the second signal, the infotainment system switches to a mixed mode, where the electronic control unit simultaneously excites the transducer in a frequency range above the first threshold and below the second threshold. A technical benefit may include combining sounds and vibration to provide specific feedback. Also, the haptic feedback does not interrupt the sound being played by the speaker, for example in the case of music.

In some examples, when the electronic control unit receives simultaneously the first signal and the second signal, the infotainment system switches to the vibration mode. A technical benefit may include the fact that a higher power output is therefore available for the haptic feedback, while the infotainment system works in a silent mode.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary vehicle according to the invention, the vehicle comprising an infotainment system according to the invention;
**FIG. 2** is a schematic view of the infotainment system of the vehicle of figure 1; and
**FIG. 3** is a synoptic diagram of a control method of the infotainment system of the invention.

### DETAILED DESCRIPTION

Aspects set forth below represent the necessary information to enable those skilled in the art to practice the disclosure.

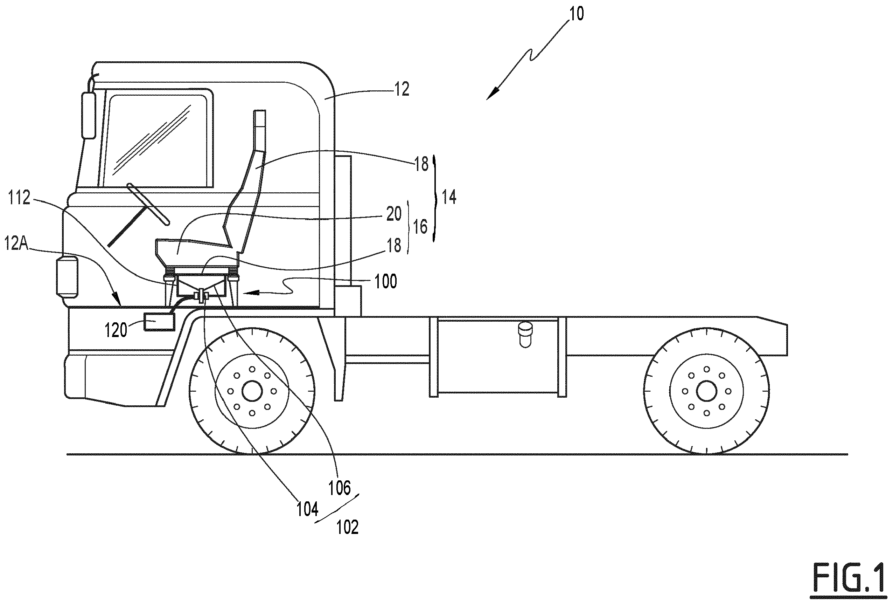

A vehicle 10 according to the invention is represented on FIG. 1. In particular, the vehicle 10 is a road vehicle, here a truck. Alternatively, the vehicle 10 is a car, or a bus, or another type of road vehicle. The vehicle 10 comprises a cabin 12 with a seat 14, where a driver may take place to operate the vehicle 10.

The seat 14 comprises a sitting portion 16 and a backrest 18. The sitting portion 16 usually comprises a frame 18, which supports cushioning materials 20. The frame 18 is usually made out of rigid material such as metal and is attached to a floor 12A of the cabin 12.

The vehicle 10 also comprises an infotainment system 100. The infotainment system 100 is configured to provide sound, for example music and/or route information and/or, driving directions, etc., to the driver. The infotainment system 100 comprises a speaker 102. The speaker 102 is configured to be attached to a seat 14 of the vehicle 10. More precisely, the speaker 102 is attached to the frame 18 of the sitting portion 16, below the sitting portion 16. In the illustrated example, the speaker 102 comprises a transducer 104 - also called driver - and a membrane 106. In addition to the speaker 102, the infotainment system 100 may also comprise one or more other speakers, which are arranged inside the cabin 12. The other speakers are not shown.

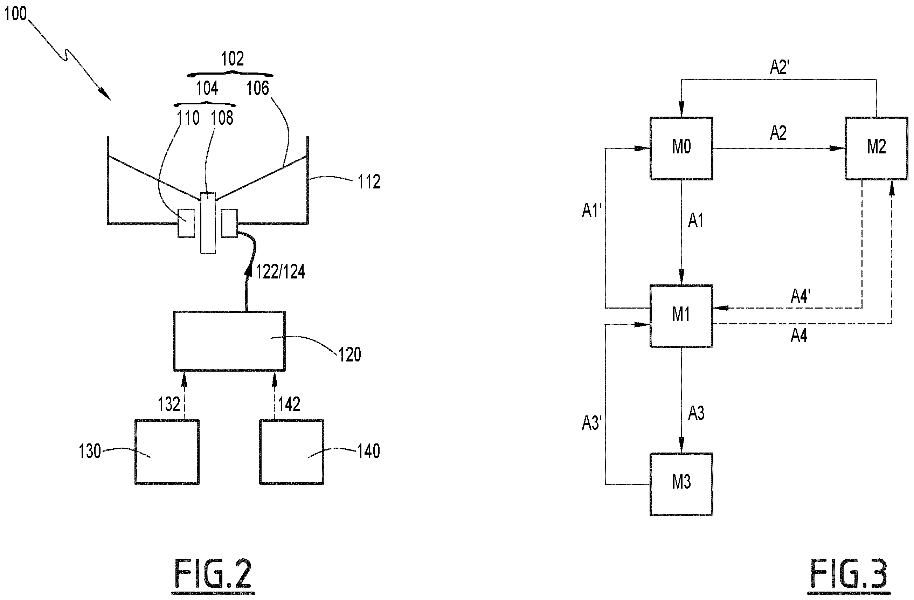

The speaker 102 is schematically represented at a larger scale on figure 2 a). In the illustrated example, the transducer 102 comprises a mobile portion 108, which is attached to the membrane 106, and fixed portion 110, which is attached to a casing 112 of the speaker 102. For example, the mobile portion 108 comprises permanent magnets, while the fixed portion 110 comprises a coil that surrounds the mobile portion 108. When an electric current flows through the coil, the mobile portion 108 is displaced accordingly. Depending on a frequency of the electric current flowing through the coil, the mobile portion 108 and the membrane 106 vibrate accordingly, generating air pressure waves. Depending on the vibration frequency of the membrane 106, these air pressure waves are audible, in other words the speaker 102 generate sounds. Within the scope of the present description, "sounds" refer to air pressure waves within the audible frequency range for the human ear, that is to say between 20 Hz - Hertz - and 20 kHz - kiloHertz -.

The infotainment system 100 comprises an electronic control unit 120, also called ECU 120 in short, which is linked to the transducer 104, for example through an electric cable, and which is configured to control the transducer 104, in other words to excite the transducer 104 at the desired frequency. The infotainment system 100 comprises an audio source 130, which is configured to generate a first signal 132 representative of an audio signal. According to non-limiting examples, the audio source 130 is a radio, and/or a MP3 player, and/or a CD player, and/or a smartphone, and/or a navigation system, etc., while the audio signal is music, and/or natural or synthetic voice, and/or warning sounds, etc.

The ECU 120 is configured to receive the first signal 132 generated by the audio source 130. In other words, the ECU 120 is connected to the audio source 130 by suitable means, depending on the type of audio source 130. According to non-limiting examples, the ECU 120 is connected to the audio source 130 with metal wires, and/or with an optic fiber, and/or through radio waves, for example according to the standard IEEE 802.15.1, also called Bluetooth protocol, etc. The ECU 120 is also configured to generate a first output 122 based on the first signal 132, and to transmit the first output 122 to the transducer 104, so as to excite the transducer 104 in an audible frequency range above a predetermined first threshold F1. In other words, the first threshold F1 is above 20 Hz and below 20 kHz. The first threshold F1 is as low as possible, that is to say equal or lower than 80 Hz, preferably equal or lower than 40 Hz, more preferably equal to 20 Hz.

When the transducer 104 is excited by the first output 122, the infotainment system 100 is in a first mode called "audio mode" M1. By extension, the ECU 120 is also in the audio mode M1.

The frequency range of the sounds generated by the speaker 102 depends not only on the first output 122, but also on the structure of the speaker 102 itself, for example the size and material of the membrane 106, the inertia of the mobile portion 108, etc. The first threshold F1 represents the lower frequency limit of the sound that the speaker 102 is physically able to produce through movements of the membrane 106. In other words, even if the first output 132 transmitted to the speaker 108 is representative of a sound frequency below the first threshold F1, then the speaker 102 is physically unable to emit such a sound below the first threshold F1.

The speaker 102 is configured to generate sound above the first threshold F1 and below an upper limit, which is higher than the first threshold F1. Preferably, the speaker 102 is configured to generate sounds in a low frequency range, that is to say the upper limit is preferably below 200 Hz. Such a speaker is also called "sub-woofer".

The infotainment system 100 further comprises a haptic controller 140. The haptic controller 140 is configured to generate a second signal 142, which is representative of a haptic signal. In other words, the second signal 142 is representative of a vibration signal. According to some examples, the haptic controller 140 is part of a calculator belonging the vehicle 10, in particular the haptic controller 140 is functionally implemented with the existing calculator of the vehicle 10, by using dedicated software or code to the calculator. The calculator is not represented.

The ECU 120 is configured to receive the second signal 142 and to generate a second output 124, which is based on the second signal 142. The ECU 120 is also configured to transmit the second output 124 to the transducer 104, so as to excite the transducer 104 in a frequency range below a predetermined second threshold F2, in order to produce vibrations. When the transducer 104 is excited by the first second 124, the infotainment system 100 is in a second mode called "vibration mode" M2. By extension, the ECU 120 is also in the vibration mode M2.

The second threshold F2 is equal to, or lower than, the first threshold F1, preferably lower than 20 Hz. Alternatively, when the first threshold F1 is above 20 Hz, for example equal to 80 Hz, then the second threshold F2 is between 20 Hz and the first threshold F1, for example the second threshold F2 is equal to 60 Hz. Consequently, when the transducer 104 is excited by the second output 124, the speaker 102 emits vibrations but does not emit sound from the movements of the membrane 106. In other words, the speaker 102 remains silent, either because the vibrations emitted by the speaker 102 are below 20 Hz, and are therefore inaudible, or because the vibrations emitted by the speaker 102 are below the first threshold F1, in a frequency range that cannot be produced by the speaker 102.

When the transducer is excited by the second output 124, the vibrations emitted by the speaker 102 comprise air pressure waves that are produced by the membrane 106 and/or mechanical vibrations that are transmitted by the speaker 102 through the casing 112 to the frame 18 of the seat 14.

Depending on the inputs received by the ECU 120, the infotainment system 100 is configured to operate between the audio mode M1 and the vibration mode M2 or according to a mixed mode.

A control method implemented with the infotainment system 100 is now described with reference to figure 3.

When the ECU 120 does not receive any first input 132 from the audio source 130 nor any second input 142 from the haptic controller 140, the EUC 120 and the infotainment system 100 are in an initial mode M0, or waiting mode.

When the ECU 120 is in the initial mode M0, if the ECU 120 receives the first input 132 from the audio source 130, then the ECU 120 switches from the initial mode M0 to the audio mode M1. The switch from the initial mode M0 to the audio mode M1 is represented by an arrow A1.

When the ECU 120 is in the audio mode M1, if the first input 132 is interrupted, then the ECU 120 switches from the audio mode M1 back to the initial mode M0. The switch from the audio mode M1 to the initial mode M0 is represented by an arrow A1'.

When the ECU 120 is in the initial mode M0, if the ECU 120 receives the second input 142 from the haptic controller 140, then the ECU 120 switches from the initial mode M0 to the vibration mode M2. The switch from the initial mode M0 to the vibration mode M2 is represented by an arrow A2.

When the ECU 120 is in the vibration mode M2, if the second input 142 is interrupted, then the ECU 120 switches from the vibration mode M2 back to the initial mode M0. The switch from the vibration mode M2 to the initial mode M0 is represented by an arrow A2'.

More generally, depending on the input received by the ECU 120, the infotainment system 100 is configured to operate between the audio mode M1 and the vibration mode M2.

According to some embodiments, when the ECU 120 is in the audio mode M1, if the ECU 120 receives the second input 142 from the haptic controller 140, then the ECU 120 switches from the audio mode M0 to a third mode called "mixed mode" M3. In the mixed mode M3, the ECU 120 receives simultaneously the first input 132 and second input 142, and sends simultaneously the first output 122 and the second output 124 to the transducer 104, in order for the speaker 102 so simultaneously produce sounds, which correspond to the first input 132, and vibrations, which correspond to the second input 142. The switch from the audio mode M1 to the mixed mode M3 is represented by an arrow A3.

When the ECU 120 is in the mixed mode M3, if the second input 142 is interrupted, then the ECU 120 switches from the mixed mode M3 back to the audio mode M1. The switch from the mixed mode M3 to the audio mode M1 is represented by an arrow A3'.

Alternatively, when the ECU 120 is in the audio mode M1, if the ECU 120 receives the second input 142 from the haptic controller 140, then the ECU 120 switches to the vibration mode M2. In other words, the second output 124 is given priority over the first output 122, and the speaker 102 only emits vibrations. The vibration mode M2 is therefore a "silent mode", where haptic feedback can be used without emitting any sound through the membrane 106

The switch from the audio mode M1 to the vibration mode M2 is represented by an arrow A4 in broken line. When the second input 142 ends, the ECU 120 switches back to the audio mode M1, as represented by an arrow A4' in broken line.

According to other embodiments, when the ECU 120 is in the mixed mode M3, the first output 122 and/or the second output 124 are adjusted to change the relative power of the sounds and/or vibrations emitted by the speaker 102. For example, the first output 122 is adjusted in order to reduce the sound volume of the speaker 102, so as to attract further the attention of the driver to the vibrations emitted by the speaker 102.

More generally, the infotainment system 100 allows the implementation of an haptic feedback system by using existing hardware of the vehicle 10, the existing hardware including the calculator, the ECU 120, the speaker 102, and adding the new functionalities related to haptic feedback and vibration generation by the speaker 102 simply adding software and/or code lines to the existing software, so that the control method described above can be implemented with the existing hardware.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. An infotainment system (100) for a vehicle (10), the infotainment system (100) comprising:
- a speaker (102),
• which is configured to be attached to a seat (14) of the vehicle (10)
• which comprises a transducer (104), and
• which is configured to generate audible sounds above a first threshold (F1),
- an audio source (130), configured to generate a first signal (132) representative of an audio signal, and
- an electronic control unit (120), which is configured:
• to receive the first signal (132) and to generate a first output (122) based on the first signal (132), and
• to transmit the first output (122) to the transducer (104), so as to excite the transducer (104) in an audible frequency range above a predetermined first threshold (F1), the infotainment system (100) being in an audio mode (M1),
wherein:
- the infotainment system (100) further comprises a haptic controller (140), which is configured to generate a second signal (142), representative of a haptic signal,
- the electronic control unit (120) is configured:
• to receive the second signal (142) and to generate a second output (124), based on the second signal (142), and
• to transmit the second output (124) to the transducer (104), so as to excite the transducer (104) in a frequency range below a predetermined second threshold (F2), the second threshold (F2) being equal to or lower than the first threshold (F1), the infotainment system (100) being in a vibration mode (M2),
- the infotainment system (100) is configured to switch between the first mode and the second mode.

2. The infotainment system (100) according to claim 1, wherein the first threshold (F1) is equal or lower than 80 Hz, preferably equal or lower than 40 Hz, more preferably equal to 20 Hz.

3. The infotainment system (100) according to any one of claims 1 or 2, wherein the second threshold (F2) is equal to 20 Hz.

4. The infotainment system (100) according to any one of claims 1 to 3, wherein the transducer (104) is configured to exclusively generate vibrations below the second threshold (F2) when the electric control unit (120) receives the second signal (142).

5. The infotainment system (100) according to any one of claims 1 to 3, wherein the transducer (104) is configured to function in a mixed mode (M3), where the speaker (102) generates, simultaneously, sounds above the first threshold (F1) and vibrations below the second threshold (F2).

6. The infotainment system (100) according to any one of claims 1 to 5, wherein the first threshold (F1) and the second threshold (F2) are equal.

7. A vehicle (10), comprising:
- a seat (14), comprising a sitting portion (16) with a frame (18), and
- an infotainment system (100) according to any one of claims 1 to 6,
wherein the speaker (102) is attached to the frame.

8. The vehicle (10) according to claim 7, wherein the speaker (102) is attached under the sitting portion (16)

9. A control method implemented with the infotainment system (100) according to any one of claims 1 to 6 or with the vehicle (10) according to any one of claims 7 or 8, wherein :
- when the electronic control unit (120) receives the first signal (132) and no second signal (142), the infotainment system (100) switches to the audio mode (M1),
- when the electronic control unit (120) receives the second signal (142) and no first signal (132), the infotainment system (100) switches to the vibration mode (M2).

10. The control method according to claim 9, wherein:
- when the electronic control unit (120) receives simultaneously the first signal (132) and the second signal (142), the infotainment system (100) switches to a mixed mode (M3), where the electronic control unit (120) simultaneously excites the transducer (104) in a frequency range above the first threshold (F1) and below the second threshold (F2).

11. The control method according to claim 9, wherein:
- when the electronic control unit (120) receives simultaneously the first signal (132) and the second signal (142), the infotainment system (100) switches to the vibration mode (M2).
